(19) Europäisches Patentamt / European Patent Office / Office européen des brevets

(11) **EP 3 321 489 B1**

(12) **EUROPEAN PATENT SPECIFICATION**

(45) Date of publication and mention of the grant of the patent:
**16.02.2022 Bulletin 2022/07**

(21) Application number: **17193840.0**

(22) Date of filing: **28.09.2017**

(51) International Patent Classification (IPC):
$F02C\ 6/08$ (2006.01)     $F02C\ 9/18$ (2006.01)
$F04D\ 27/02$ (2006.01)     $F04D\ 29/42$ (2006.01)

(52) Cooperative Patent Classification (CPC):
**F02C 9/18; F02C 6/08; F04D 27/023;
F04D 29/4206;** F05D 2250/322; F05D 2250/52;
F05D 2270/10

(54) **GAS TURBINE ENGINE BLEED CONFIGURATION**

ENTLÜFTUNGSKONFIGURATION EINES GASTURBINENMOTORS

CONFIGURATION DE PURGE D'UN MOTEUR À TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2016 US 201615350837**

(43) Date of publication of application:
**16.05.2018 Bulletin 2018/20**

(73) Proprietor: **Pratt & Whitney Canada Corp.
Longueuil, Québec J4G 1A1 (CA)**

(72) Inventors:
• **MORGAN, Keith
Longueuil, Québec J4G 1A1 (CA)**
• **PLANTE, Ghislain
Longueuil, Québec J4G 1A1 (CA)**
• **DUROCHER, Eric
Longueuil, Québec J4G 1A1 (CA)**
• **NG, Kevin
Longueuil, Québec J4G 1A1 (CA)**
• **VINSKI, Johnny
Longueuil, Québec J4G 1A1 (CA)**

(74) Representative: **Dehns
St. Bride's House
10 Salisbury Square
London EC4Y 8JD (GB)**

(56) References cited:
EP-A1- 2 930 371     EP-A2- 2 447 504
EP-A2- 2 562 370     US-A1- 2014 255 181

**Description**

TECHNICAL FIELD

The application relates generally to gas turbine engines and, more particularly, to bleed air configuration for engines with a centrifugal compressor.

BACKGROUND

In an aircraft, bleed air is compressed air that is taken/bled from the compressor section of an engine. Bleed air is used to provide pressurized air to various parts of an aircraft, such as the environmental control system (hereinafter referred to as "ECS").

In gas turbine engines where the last (most downstream) compression stage is a centrifugal compressor/impeller (hereinafter referred to as "Engines with a Downstream Centrifugal Impeller"), it is well known to take ECS bleed air from 2 locations along the engines' annular gas path: one at a (1st) location positioned upstream of the last compression stage of the compressor (i.e. upstream of the centrifugal impeller), and another at a (2nd) location positioned downstream of the centrifugal impeller and upstream of the combustor, at a location known as P3. Typically, when the engines are operating in a low pressure (Low Power) range environment (i.e. when operating at low thrust or at high altitude), Low Power ECS bleed air is taken at the 2nd location (P3), and when the engines are operating in a high pressure (High Power) range environment (i.e. when operating at higher thrust or at lower altitude), High Power ECS bleed air is taken at the 1st location. A switching valve, operating on detected pressure, normally ensures the alternation between the two (Low Power & High Power) ECS bleed sources.

There is an ongoing need for ever more efficient ECS bleed air configurations for gas turbine engines, more specifically for Engines with a Downstream Centrifugal Impeller.

A prior art method of bleeding air from a gas turbine engine and gas turbine engine having the features of the preamble to claims 1 and 6 is disclosed in EP 2,562,370. Other prior art compressor sections having centrifugal impellers are disclosed in US 2014/255181, EP 2,930,371 and EP 2,447,504.

SUMMARY OF THE INVENTION

There is accordingly provided, in accordance with a first aspect of the present invention, a method of bleeding air from a gas turbine engine in accordance with claim 1.

In the method as described above, the centrifugal compressor may include splitter blades and the second location is positioned downstream of leading edges of the splitter blades.

In the method as described above, the second location may be positioned between 10% and 75% normalised shroud radial position.

In the method as described above, bleeding air from the second location may include partially recovering dynamic pressure of the air.

In the method as described above, the second location may be positioned on the centrifugal compressor's shroud.

In accordance with another aspect of the present invention, there is also provided a gas turbine engine comprising a compressor section for providing compressed air to a combustor in accordance with claim 6.

In the gas turbine engine as defined above, the second bleed opening arrangement may be capable of partially recovering dynamic pressure of the air.

In the gas turbine engine as defined above, the centrifugal impeller may also include splitter blades, wherein the second bleed opening arrangement is positioned downstream of leading edges of the splitter blades, and optionally the second bleed opening arrangement may include orifices, through centrifugal impeller shroud, aligned partially tangential to the compressed air flow direction.

In the gas turbine engine as defined above, the second bleed opening arrangement may be positioned between 10% and 75% normalised shroud radial position, and optionally the second bleed opening arrangement may inlcude orifices, through centrifugal impeller shroud, aligned partially tangential to the compressed air flow direction.

The gas turbine engine as defined above may further comprise a third bleed opening arrangement, positioned in the impeller shroud, for providing bleed air to the engine.

in the gas turbine engine as defined above, the first and second bleed opening arrangements of the centrifugal compressor shroud may comprise orifices aligned partially tangential to the anticipated compressed air flow direction through the centrifugal impeller.

Further details of these and other aspects of the subject matter of this application will be apparent from the detailed description and drawings included below.

BRIEF DESCRIPTION OF THE DRAWINGS

Reference is now made to the accompanying figures in which:

Fig. 1 is a schematic cross-sectional view of a gas turbine engine;
Fig. 2 is a cross-sectional view of a compression section of an engine pursuant to an embodiment of the invention,
Fig. 3 is an isometric view of a centrifugal impeller pursuant to an embodiment of the invention;
Fig. 4 is a cross-sectional view of a centrifugal impeller pursuant to an embodiment of the invention;

and
Fig. 5 is a cross-sectional view of a compression section of an engine pursuant to an alternate embodiment of the invention.

DETAILED DESCRIPTION

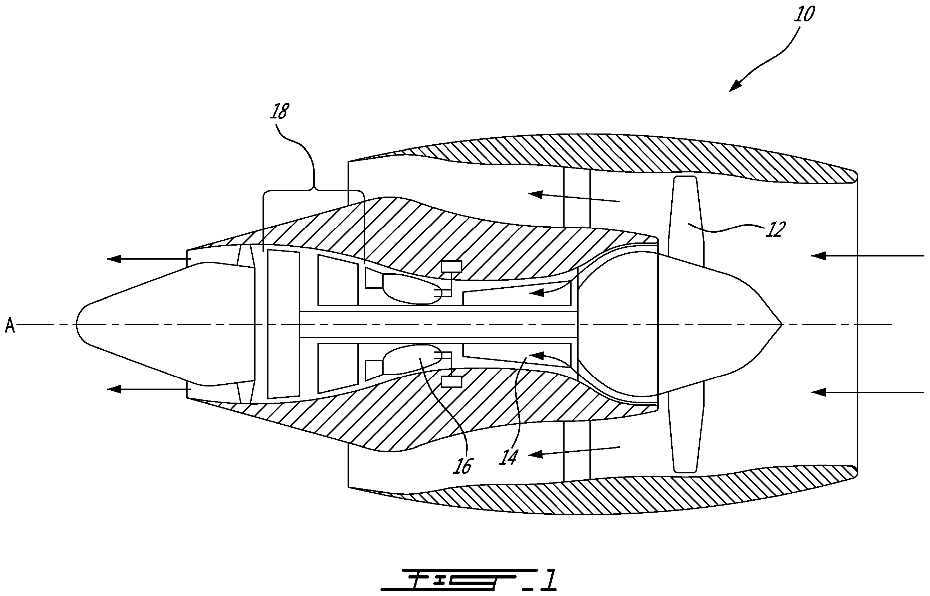

Fig. 1 illustrates, schematically, a gas turbine engine 10 of a type preferably provided for use in an aircraft, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The air flow direction through the engine, when in operation, is shown schematically in Fig. 1 by arrows. Compressor section 14 is typically comprised of various stages, where the air is sequentially and increasingly pressurized via one or a number of axial and/or centrifugal compressors. As air proceeds through compressor section 14, a certain amount is taken/bled; this is known as bleed air.

Bleed air is compressed air, taken/bled from compressor section 14 of an engine when in operation, for purposes other than combustion in the combustor 16. Bleed air is used to provide pressurized air to various parts of an aircraft, such as the environmental control system (ECS), the anti-icing system and various systems of the engine itself, examples of the latter being air used to preserve the stability of the compressor system (known as compressor handling bleed air) or air used to maintain internal engine functions (known as engine secondary air). Each such system has air pressure and/or temperature requirements, which has an effect on where and how bleed air may or may not be taken to satisfy the requirements of each such system.

In engines with a Downstream Centrifugal Impeller, it is well known to take air that will be supplied to the ECS, known as ECS bleed air, at the centrifugal impeller's outlet (i.e. at the outlet of compressor section 14/inlet of the combustor 16, a station known as P3), as this is where ECS bleed air requirements (mass flow, static pressure, temperature...) are met for all engine operation conditions. It is also well known to take ECS bleed air at P3 only when an Engine with a Downstream Centrifugal Impeller is operating in a low pressure range environment (i.e. when operating at low thrust and/or at high altitude, an engine state known as "Low Power") and to take ECS bleed air more upstream of the P3 station, but still downstream of what is known as the P2 station (which refers to compressor section 14's inlet), when an Engine with a Downstream Centrifugal Impeller is operating in a high pressure range environment (i.e. when operating at higher thrust and/or at lower altitude, an engine state known as "High Power").

Indeed, when designing bleed air configurations, one must always strive to use as low a supply pressure as possible (i.e. as much upstream compressor section 14 as possible), because the energy that is used by an engine to compress the bleed air is not available for propulsion purposes, with the consequent fuel consumption/efficiency loss. Therefore, a well-known ECS bleed air configuration is such that, as engine operating pressure increases and a predetermined crossover point between the low pressure range and the high pressure range is reached, the ECS bleed air stops being taken from the P3 station and starts being taken more upstream, at stations known as P2.# (with "#" typically being numbers between 0 and 9, 0 referring to a location in the compression section close to its inlet and 9 referring to a location in the compression section close to its outlet); the reverse happens as engine operating pressure decreases. In other words, when an Engine with a Downstream Centrifugal Impeller is at Low Power, (Low Power) ECS bleed air is taken at P3 and, when an Engine with a Downstream Centrifugal Impeller is at High Power, (High Power) ECS bleed air is taken at P2.#.

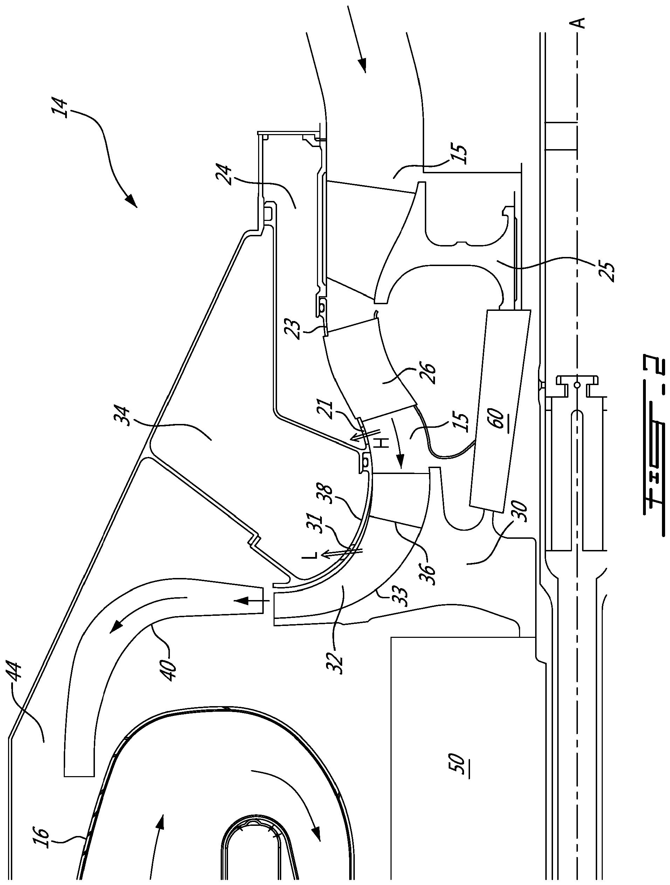

Drawing ECS bleed air at P3 is however problematic as it sometimes contributes to Cabin Fume events (also known as "smoke in the cabin" events or "cabin air contamination" events). Cabin Fume events refer to instances when an aircraft air cabin is contaminated by chemicals. In aircraft powered by Engines with a Downstream Centrifugal Impeller, this sometimes occur because of the compressor shaft bearing cavity's (shown as item 50 in Fig. 2) proximity to the P3 station; indeed, because of such proximity, there is the possibility of the P3 station (and therefore any bleed air being taken therefrom) being contaminated by chemicals such as oil that are present in (but may escape from) such compressor shaft bearing cavity, thereby resulting in a Cabin Fume event. Even though rare, Cabin Fume events are being increasingly frowned upon by airlines. There is therefore a disadvantage in drawing ECS bleed air, in any circumstances, at P3.

Pursuant to an embodiment of the invention, an Engine with a Downstream Centrifugal Impeller will be described, more specifically, as shown in Fig. 2, the downstream part of compressor section 14 and a portion of combustor 16. As represented schematically by single line arrows, air is shown flowing in an annular gas path 15 of compressor section 14 through a penultimate compression stage, in the current embodiment an axial compressor comprising an axial compressor rotor 25 and axial compressor stators 26. The radially outer boundary of the gas path 15 is radial outer wall 23.

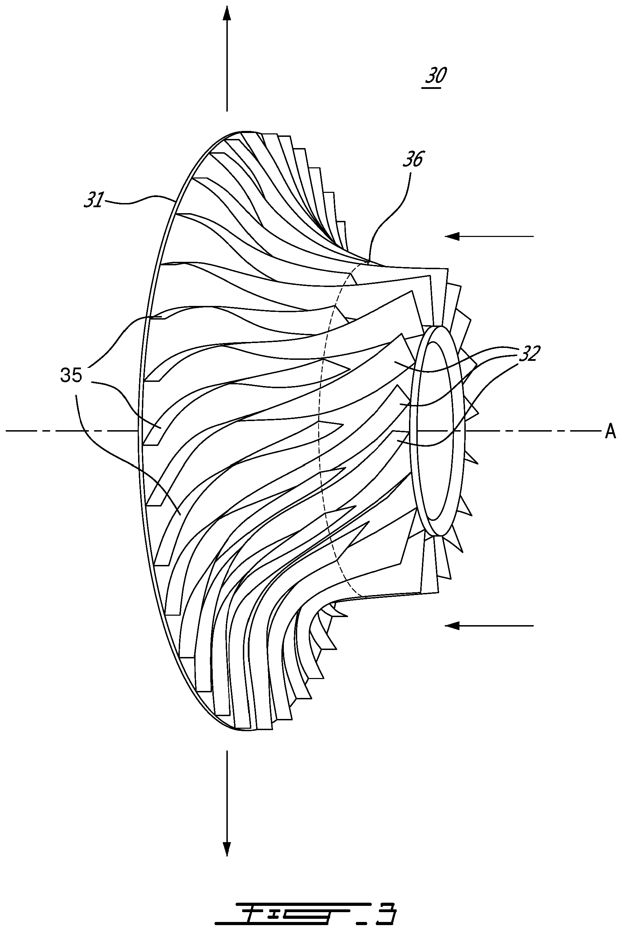

Air thereafter flows through compressor section 14's last compression stage, in the current embodiment centrifugal impeller 30. As is represented schematically by box 60 and is well known in the art, centrifugal impeller 30 is linked to the remaining rotating portion of compressor section 14, such as axial compressor rotor 25 in the current embodiment. As also shown in Fig. 3, centrifugal impeller 30 comprises a hub 33, which acts as the radially inner boundary of the gas path 15, and a plurality of compressor blades 32 protruding within the gas path 15. A stationary centrifugal impeller shroud 38 surrounds compressor blades 32 and acts as the radially outer boundary of the gas path 15. Consequently, air enters centrifugal impeller 30 in a generally axial direction and exits in a generally radial direction (shown schematically with single line arrows in Fig. 3). Centrifugal impeller 30 may also comprise splitter blades 35 which are known to stabilize the air flow exiting centrifugal impeller 30. Such splitter blades 35 are positioned between compressor blades 32 and extend from the exit of the centrifugal impeller 30. The extension of such splitter blades 35 stop short of the entrance of the centrifugal impeller 30 so as to form a plane known as splitter blade leading edge plane 36.

When air exits centrifugal impeller 30, and more generally compression section 14, it enters a diffuser 40, which purpose is to slow down the air flow, more specifically to convert the air flow's pressure from a predominantly dynamic pressure form to a predominantly static pressure form. Air exits diffuser 40 into P3 volute 44. Volute 44 is fluidly linked to combustor 16's entrance, resulting in compressed air from compressor section 14 being fed to combustor 16. P3 Volute 44 is where Low Power ECS bleed air is taken in previously known Engines with a Downstream Centrifugal Impeller. As will be seen in more details below, no ECS bleed air is taken at the P3 station or anywhere downstream centrifugal impeller 30's exit. Therefore, the Cabin Fume event issue outlined above is addressed.

In more recent Engines with a Downstream Centrifugal Impeller, the Overall Compression pressure Ratio (OPR), which is the factor by which compressor section 14 can increase the air pressure (i.e. air pressure at P3/ambient air pressure), is large enough so that the total air pressure at certain points between centrifugal impeller 30's entrance and exit is sufficient to meet current Low Power ECS bleed air requirements. Also, because of more recent aircraft's move towards more electric architectures, ECS bleed air requirements are lower, such that, again, the total air pressure at certain points between centrifugal impeller 30's entrance and exit is sufficient.

As shown in Fig. 2, ECS bleed air (shown schematically by double line arrows) is taken at 2 locations, wherein both locations are positioned on gas path 15's radially outer boundary and positioned upstream of centrifugal impeller 30's outlet, with the 1st location being positioned upstream of the 2nd location.

In Engines with a Downstream Centrifugal Impeller, the location immediately upstream of centrifugal impeller 30 is known as P2.7 and the location over centrifugal impeller 30 (i.e. between the inlet and outlet of this last compression stage), is known as P2.8. In the current embodiment, 1st location is positioned at P2.7, where 1st bleed opening arrangement 21 can be found. High Power ECS bleed air H is taken from the 1st location, more specifically via 1st bleed opening arrangement 21, and directed into P2.7 Volute 24. No further details is given regarding P2.7 Volute 24, or any other volute referred to elsewhere in this description as such details will be apparent to someone skilled in the art.

High Power ECS bleed air H is then taken from P2.7 Volute 24 to the ECS in the way that will be apparent to those skilled in the art (not shown). In the current embodiment, High Power ECS bleed air H is sufficient to meet the compressor handling bleed air and engine bleed air requirements; therefore, air bled at this 1st location is utilised for all three purposes (High Power ECS, compressor handling and engine secondary air system). One skilled in the art will however understand that the invention is not limited to requiring that ECS bleed air taken at the 1st location having to meet all 3 such purposes; other purposes besides, or no purposes save for, High Power ECS system requirements are possible pursuant to the invention. As air pressure exiting axial compressors are generally in the form of static pressure and hence not in need to be significantly converted any further, 1st bleed opening arrangement 21 are orifice(s), through radial outer wall 23, aligned perpendicularly to the air flow direction (similarly to a static pressure tap hole).

In the current embodiment, 2nd location is positioned on centrifugal impeller shroud 38, in the current embodiment at station P2.8, where 2nd bleed opening arrangement 31 can be found. Low Power ECS bleed air L is taken from the 2nd location, more specifically via 2nd bleed opening arrangement 31, and directed into P2.8x Volute 34.

Low Power ECS bleed air L is then taken from P2.8x Volute 34 to the ECS in the way that will be apparent to those skilled in the art (not shown). In the current embodiment, Low Power ECS bleed air L is sufficient to meet the aircraft anti-icing system bleed air requirements; therefore, air bled at this 2nd location is utilised for both purposes (Low Power ECS and anti-icing system). One skilled in the art will however understand that the invention is not limited to requiring that ECS bleed air taken at the 2nd location having to meet both purposes; other purposes besides, or no purposes save for, Low Power ECS system requirements are possible pursuant to the invention.

The air passing through centrifugal impeller 30, more specifically the air flowing over centrifugal impeller shroud 38, fluctuates in terms of its characteristics, such as total pressure, ratio of dynamic vs static pressure, turbulence etc... The choice of the 2nd location, more specifically the location of 2nd bleed opening arrangement 31, as well as the characteristics of such 2nd bleed opening arrangement 31, will therefore depend on such characteristics. The 2nd location must be positioned, along centrifugal impeller shroud 38, where sufficient total energy (air pressure) is available to meet current Low Power ECS bleed air requirements and 2nd bleed opening arrangement 31 must have enough dynamic energy (pressure) recovery characteristics to ensure the necessary dynamic to static energy (pressure) conversion. Indeed, the dynamic energy (i.e. pressure) of air flowing through a centrifugal impeller represents a large proportion of the total energy (i.e. pressure) of such flow. As only the static energy (i.e. pressure) is useful for bleed air purposes, one must ensure, when taking bleed air from a passing air flow, that the static energy (pressure) is high enough to meet the bleed requirements, and/or to sufficiently convert dynamic energy (pressure) into static energy (pressure) to meet such requirements. Pursuant to the invention, this means that, when adding the static pressure at the 2nd location plus the dynamic recovery characteristics of the 2nd bleed opening arrangement 31, the Low Power ECS bleed air requirements are met. As one travels upstream along centrifugal impeller shroud 38 and the static pressure increases, this means that the dynamic recovery needs of the 2nd bleed opening arrangement 31 decrease.

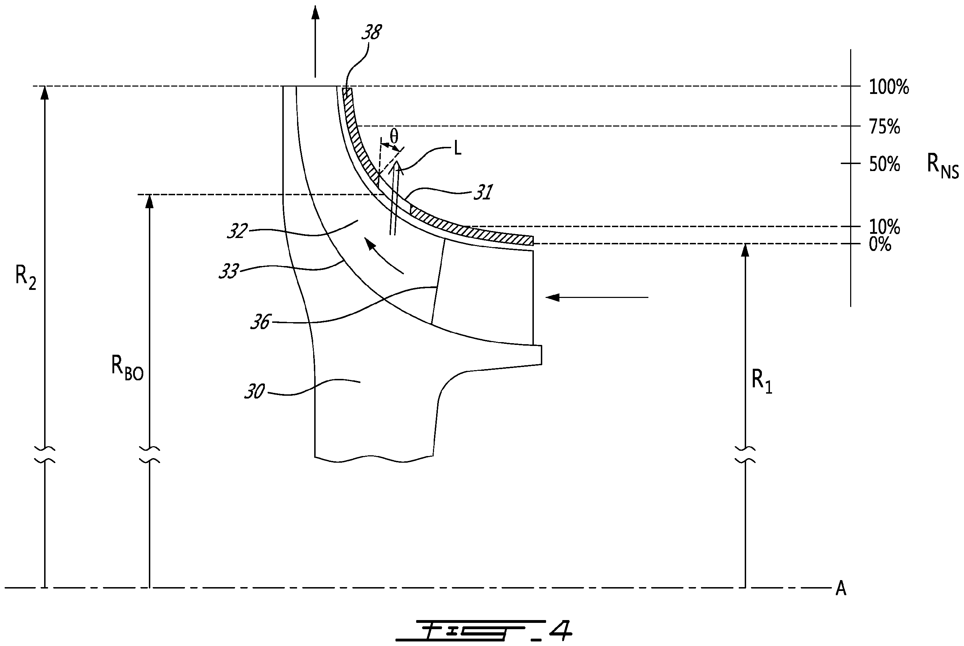

As shown in Fig. 4, the position of 2nd location, more specifically the position of 2nd bleed opening arrangement 31, is expressed in terms of normalised shroud radial position $R_{NS}$,
wherein

$$RNS = \frac{RBO - R1}{R2 - R1} * 100$$

with $R_1$: radial distance of shroud 38, at the entrance of centrifugal impeller 30

$R_2$: radial distance of shroud 38, at the exit of centrifugal impeller 30

$R_{BO}$: radial distance of 2nd bleed opening arrangement 31 all radial distances being from engine centerline A.

A 100% $R_{NS}$ position would mean that 2nd bleed opening arrangement 31 would be positioned at centrifugal impeller 30's exit. As outlined above, no ECS bleed air is to be taken at the P3 station or anywhere downstream centrifugal impeller 30's exit (to address Cabin Fume event issues). In order to add a certain margin of safety in that regard (i.e. to avoid taking P3 air), it is preferred to avoid taking ECS bleed air in the immediate upstream vicinity of centrifugal impeller 30's exit. Furthermore, taking ECS bleed air in the immediate upstream vicinity of centrifugal impeller 30's exit could raise some tip impeller to shroud clearance issues. More specifically, having bleed opening arrangements and/or dynamic pressure recovery mechanisms near the shroud's exit could affect such shroud tip's stiffness, with a negative impact on the impeller-shroud clearance at that location. Shroud stiffness design is contingent upon anticipated impeller and shroud displacement during operation. Consequently, it has been found to be preferred to have 2nd bleed opening arrangement 31 positioned upstream of the 75% $R_{NS}$ position.

A 0% $R_{NS}$ position would mean that 2nd bleed

opening arrangement 31 would be positioned at centrifugal impeller 30's entrance. That position, or in its immediate downstream vicinity, would not be preferred because of the insufficient pressure rise in the air. Furthermore, at least until a point downstream of splitter blade leading edge plane 36, air flow would present stability issues. Consequently, it has been found to be preferred to have 2nd bleed opening arrangement 31 positioned downstream of the splitter blade leading edge plane 36 or, alternatively, downstream of the 10% $R_{NS}$ position. In the embodiment shown in Fig. 4, 2nd bleed opening arrangement 31 is positioned at approximately the 50% $R_{NS}$ position

Turning now to the characteristics of 2nd bleed opening arrangement 31, it is understood the more upstream it is positioned, the greater the dynamic pressure recovery will be needed. This is because, as one travels upstream on centrifugal impeller shroud 38, the lower the available static pressure of the air is. In the embodiment shown in Fig. 4, the dynamic pressure recovery characteristics of 2nd bleed opening arrangement 31 consists in having orifice(s), through centrifugal impeller shroud 38, aligned partially tangential to the air flow direction i.e. at an angle ⊖ (as shown in Fig. 4) from a position away from a perpendicular to the airflow direction (i.e. away from a static pressure tap hole configuration). As one would move 2nd bleed opening arrangement 31 downstream of the approximate 50% $R_{NS}$ position, less dynamic pressure recovery characteristics would be need, which could translate in 2nd bleed opening arrangement 31 consists in having orifice(s), through centrifugal impeller shroud 38, aligned less tangentially to the air flow direction (i.e. at a lesser angle ⊖). On the other hand, as one would move 2nd bleed opening arrangement 31 upstream of the approximate 50% $R_{NS}$ position, more dynamic pressure recovery characteristics would be need, which could translate in 2nd bleed opening arrangement 31 consists in having orifice(s), going through centrifugal impeller shroud 38, aligned more tangentially to the air flow direction (i.e. at a larger angle ⊖) and/or introducing other dynamic pressure recovery mechanisms such as local vane diffuser, pipe diffuser or swirl break.

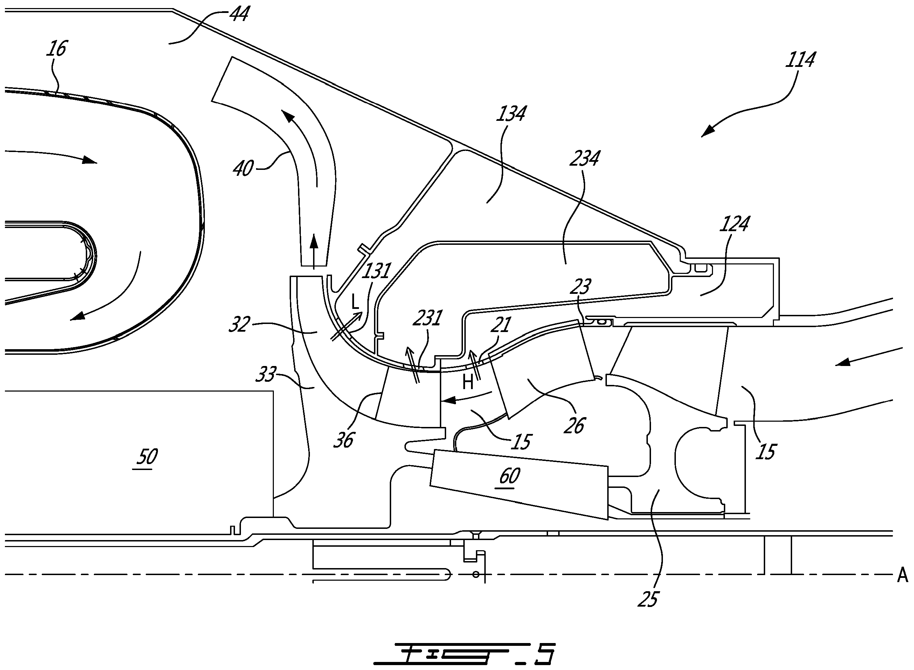

Fig. 5 shows the downstream part of compressor section 114 pursuant to an alternate embodiment of the invention and a portion of combustor 16. In this alternate embodiment, bleed air is taken at 3 locations (as opposed to 2 locations in the above-described, and shown in Fig. 4, embodiment). More specifically, a further bleed air location is added on centrifugal impeller shroud 38.

In the embodiment shown in Fig. 5, High Power ECS bleed air H is taken at a 1st location, more specifically from 1st bleed opening arrangement 21 and directed into P2.7 Volute 124. However, contrary to compressor section 14 shown in Fig. 4, the only other purpose met by the P2.7 Volute 124 air is engine secondary air system, with compressor handling purpose being met at another bleed location.

Low Power ECS bleed air L is taken at a 2nd location, more specifically from 2nd bleed opening arrangement 131, which is positioned more downstream of 2nd bleed opening arrangement 31 described in Fig. 4, and directed into P2.8x Volute 134. Because of such further downstream location, 2nd bleed opening arrangement 131 has lesser dynamic pressure recovery needs than 2nd bleed opening arrangement 31 described in Fig. 4. Consequently, as shown in Fig. 5, 2nd bleed opening arrangement 131 consists in having orifice(s) going through centrifugal impeller shroud 38 at a lesser angle than what was present in 2nd bleed opening arrangement 31. In the current embodiment, air bled at this 2nd location is again also utilised for anti-icing system purposes.

A 3rd bleed air location, positioned on centrifugal impeller shroud 38 and upstream of 2nd location, is utilised for compressor handling bleed air purposes. This is where 3rd bleed opening arrangement 231 can be found. One skilled in the art will recognise that 3rd bleed opening arrangement 231 is positioned upstream of splitter blade leading edge plane 36, with the consequent air flow turbulence and lower total pressure issues that arise therefrom; the characteristics of 3rd bleed opening arrangement 231 will be consequently adjusted to meet such compressor handling bleed air purposes.

The above description is meant to be exemplary only, and one skilled in the art will recognize that changes may be made to the embodiments described without departing from the scope of the invention disclosed. For example, in the embodiment outlined above, a number of axial compressors are found upstream of centrifugal impeller 30. One, or no, axial compressor may be found (for example in Engines with a Downstream Centrifugal Impeller where centrifugal impeller 30 provides all of the necessary air compression). Alternatively, other types of compressors, such as one or more centrifugal impellers, may be found upstream of centrifugal impeller 30. Furthermore, other bleed opening arrangements, over and above the 2 ECS bleed air opening arrangements, may be found pursuant to the invention. Still other modifications which fall within the scope of the present invention will be apparent to those skilled in the art, in light of a review of this disclosure, if such modifications fall within the appended claims.

**Claims**

1. A method of bleeding air from a gas turbine engine (10) comprising a compressor section (14;114) with a downstream centrifugal compressor,
   **characterized in that** the method includes:

   bleeding air from a first location positioned upstream of the centrifugal compressor's inlet and supplying the air bled from the first location to an environmental control system of an aircraft when the compressor is operating in a first pressure range; and
   bleeding air from a second location positioned upstream of the centrifugal compressor's outlet and downstream of the centrifugal compressor's inlet, the second location being positioned downstream of the first location and supplying the air bled from the second location to the environmental control system of the aircraft when the engine is operating in a second pressure range, the second pressure range being lower than the first pressure range.

2. The method as defined in claim 1, wherein the centrifugal compressor comprises splitter blades (35) and the second location is positioned downstream of leading edges of the splitter blades (35).

3. The method as defined in any one of the preceding claims, wherein the second location is positioned between 10% and 75% normalised shroud radial position ($R_{NS}$).

4. The method as defined in any one of the preceding claims, wherein bleeding air from the second location comprises partially recovering dynamic pressure of the air.

5. The method as defined in any one of the preceding claims, wherein the second location is positioned on the centrifugal compressor's shroud.

6. A gas turbine engine (10) comprising a compressor section (14;114) for providing compressed air to a combustor (16), the compressor section (14;114) comprising:

   an annular gas path (15), positioned around the engine's centerline (A), for conveying air across the compressor section (14;114);
   a centrifugal impeller (30), positioned in a downstream extremity of the compressor section (14;114), the centrifugal impeller (30) comprising a plurality of blades (32) protruding within the annular gas path (15), wherein air enters an inlet of the centrifugal impeller (30) in a generally axial direction and exits an outlet of the centrifugal impeller (30) in a generally radial direction;
   a centrifugal impeller shroud (38) surrounding the blades (32) and acting as a portion of a radially outer boundary of the annular gas path (15); wherein the compressor section (14;114) includes
   a first bleed opening arrangement (21); and
   a second bleed opening arrangement (31;131), positioned in the impeller shroud (38), wherein the first bleed opening arrangement (21) is positioned upstream of the inlet of the centrifugal impeller (30), and the second bleed opening arrangement (31;131) is positioned upstream of the outlet of the centrifugal impeller (30) and downstream of the inlet of the centrifugal impeller (30), the second bleed opening arrangement (31;131) being positioned downstream of the first bleed opening arrangement (21); and **characterised in that**

the first and second bleed opening arrangements (21;31;131) are configured to provide bleed

air to an environmental control system of an aircraft, wherein the first bleed opening arrangement (21) is for bleeding air from the annular gas (15) path to the environmental control system when the engine is operating in a first pressure range, and the second bleed opening arrangement (31;131) is for bleeding air from the annular gas path (15) to the environmental control system when the engine (10) is operating in a second pressure range, the second pressure range being lower than the first pressure range.

7. The gas turbine engine as defined in claim 6, wherein the second bleed opening arrangement (31;131) is capable of partially recovering dynamic pressure of the air.

8. The gas turbine engine as defined in any one of claims 6 or 7, wherein the centrifugal impeller (30) comprises splitter blades (35) and the second bleed opening arrangement (31;131) is positioned downstream of leading edges of the splitter blades (35), and optionally wherein the second bleed opening arrangement (31;131) comprises orifices, through centrifugal impeller shroud (38), aligned partially tangential to the compressed air flow direction.

9. The gas turbine engine as defined in any one of claims 6 to 8, wherein
the second bleed opening arrangement (31;131) is positioned between 10% and 75% normalised shroud radial position ($R_{NS}$), and optionally wherein the second bleed opening arrangement (31;131) comprises orifices, through centrifugal impeller shroud (38), aligned partially tangential to the compressed air flow direction.

10. The gas turbine engine as defined in any one of claims 6 to 9, further comprising a third bleed opening arrangement (231), positioned in the impeller shroud (38), for providing bleed air to the engine.

11. The gas turbine engine as defined in any of claims 6 to 10, wherein the first and second bleed opening arrangements (21;31;131) of the centrifugal impeller shroud (38) comprise orifices aligned partially tangential to the anticipated compressed air flow direction through the centrifugal impeller (30).

**Patentansprüche**

1. Verfahren zum Abzapfen von Luft von einem Gasturbinentriebwerk (10), das einen Verdichterabschnitt (14; 114) mit einem stromabwärtigen Zentrifugalverdichter umfasst,
**dadurch gekennzeichnet, dass** das Verfahren Folgendes beinhaltet:

Abzapfen von Luft von einer ersten Stelle, die stromaufwärts des Einlasses des Zentrifugalverdichters angeordnet ist, und Liefern der Luft, die von der ersten Stelle abgezapft wurde, an eine Klimaanlage eines Luftfahrzeugs, wenn der Verdichter in einem ersten Druckbereich arbeitet; und
Abzapfen von Luft von einer zweiten Stelle, die stromaufwärts des Auslasses des Zentrifugalverdichters und stromabwärts des Einlasses des Zentrifugalverdichters angeordnet ist, wobei die zweite Stelle stromabwärts der ersten Stelle angeordnet ist, und Liefern der Luft, die von der zweiten Stelle abgezapft wurde, an die Klimaanlage des Luftfahrzeugs, wenn das Triebwerk in einem zweiten Druckbereich arbeitet, wobei der zweite Druckbereich niedriger als der erste Druckbereich ist.

2. Verfahren nach Anspruch 1, wobei der Zentrifugalverdichter Zwischenschaufeln (35) umfasst und die zweite Stelle stromabwärts von Vorderkanten der Zwischenschaufeln (35) angeordnet ist.

3. Verfahren nach einem der vorstehenden Ansprüche, wobei die zweite Stelle zwischen 10 % und 75 % der normalisierten Deckbandradialposition ($R_{NS}$) angeordnet ist.

4. Verfahren nach einem der vorstehenden Ansprüche, wobei das Abzapfen von Luft von der zweiten Stelle das teilweise Wiederherstellen des dynamischen Drucks der Luft umfasst.

5. Verfahren nach einem der vorstehenden Ansprüche, wobei die zweite Stelle an dem Deckband des Zentrifugalverdichters angeordnet ist.

6. Gasturbinentriebwerk (10), das einen Verdichterabschnitt (14; 114) zum Bereitstellen von verdichteter Luft für eine Brennkammer (16) umfasst, wobei der Verdichterabschnitt (14; 114) Folgendes umfasst:

einen ringförmigen Gasweg (15), der um die Mittellinie (A) des Triebwerks angeordnet ist, zum Befördern von Luft über den Verdichterabschnitt (14; 114);

ein Zentrifugallaufrad (30), das in einem stromabwärtigen Ende des Verdichterabschnitts (14; 114) angeordnet ist, wobei das Zentrifugallaufrad (30) eine Vielzahl von Schaufeln (32) umfasst, die innerhalb des ringförmigen Gaswegs (15) vorragen, wobei Luft in einen Einlass des Zentrifugallaufrads (30) in einer im Allgemeinen axialen Richtung eintritt und aus einem Auslass des Zentrifugallaufrads (30) in einer im Allgemeinen radialen Richtung austritt;

ein Zentrifugallaufraddeckband (38), das die Schaufeln (32) umgibt und als ein Teil einer radial äußeren Begrenzung des ringförmigen Gaswegs (15) fungiert; wobei der Verdichterabschnitt (14; 114) Folgendes beinhaltet

eine erste Zapföffnungsanordnung (21); und eine zweite Zapföffnungsanordnung (31; 131), die in dem Laufraddeckband (38) angeordnet ist, wobei die erste Zapföffnungsanordnung (21) stromaufwärts des Einlasses des Zentrifugallaufrads (30) angeordnet ist und die zweite Zapföffnungsanordnung (31; 131) stromaufwärts des Auslasses des Zentrifugallaufrads (30) und stromabwärts des Einlasses des Zentrifugallaufrads (30) angeordnet ist, wobei die zweite Zapföffnungsanordnung (31; 131) stromabwärts der ersten Zapföffnungsanordnung (21) angeordnet ist; und **dadurch gekennzeichnet, dass**

die erste und die zweite Zapföffnungsanordnung (21; 31; 131) so konfiguriert sind, dass sie Zapfluft für eine Klimaanlage eines Luftfahrzeugs bereitstellen, wobei die erste Zapföffnungsanordnung (21) dazu dient, Luft von dem ringförmigen Gas(15)weg zur Klimaanlage abzuzapfen, wenn das Triebwerk in einem ersten Druckbereich arbeitet, und die zweite Zapföffnungsanordnung (31; 131) dazu dient, Luft von dem ringförmigen Gasweg (15) zur Klimaanlage abzuzapfen, wenn das Triebwerk (10) in einem zweiten Druckbereich arbeitet, wobei der zweite Druckbereich niedriger als der erste Druckbereich ist.

7. Gasturbinentriebwerk nach Anspruch 6, wobei die zweite Zapföffnungsanordnung (31; 131) in der Lage ist, den dynamischen Druck der Luft teilweise wiederherzustellen.

8. Gasturbinentriebwerk nach einem der Ansprüche 6 oder 7, wobei das Zentrifugallaufrad (30) Zwischenschaufeln (35) umfasst und die zweite Zapföffnungsanordnung (31; 131) stromabwärts von Vorderkanten der Zwischenschaufeln (35) angeordnet ist, und optional wobei die zweite Zapföffnungsanordnung (31; 131) Austritte, durch das Zentrifugallaufraddeckband (38), umfasst, die teilweise tangential auf die Strömungsrichtung der verdichteten Luft ausgerichtet sind.

9. Gasturbinentriebwerk nach einem der Ansprüche 6 bis 8, wobei die zweite Zapföffnungsanordnung (31; 131) zwischen 10 % und 75 % der normalisierten Deckbandradialposition ($R_{NS}$) angeordnet ist, und optional wobei die zweite Zapföffnungsanordnung (31; 131) Austritte, durch das Zentrifugallaufraddeckband (38), umfasst, die teilweise tangential auf die Strömungsrichtung der verdichteten Luft ausgerichtet sind.

10. Gasturbinentriebwerk nach einem der Ansprüche 6 bis 9, ferner eine dritte Zapföffnungsanordnung (231), die in dem Laufraddeckband (38) angeordnet ist, zum Bereitstellen von Zapfluft für das Triebwerk umfassend.

11. Gasturbinentriebwerk nach einem der Ansprüche 6 bis 10, wobei die erste und die zweite Zapföffnungsanordnung (21; 31; 131) des Zentrifugallaufraddeckbands (38) Austritte umfassen, die teilweise tangential auf die antizipierte Strömungsrichtung der verdichteten Luft durch das Zentrifugallaufrad (30) ausgerichtet sind.

**Revendications**

1. Procédé de purge d'air d'un moteur à turbine à gaz (10) comprenant une section compresseur (14 ; 114) avec un compresseur centrifuge en aval, **caractérisé en ce que** le procédé comprend :

   la purge d'air d'un premier emplacement positionné en amont de l'entrée du compresseur centrifuge et la fourniture de l'air purgé du premier emplacement à un système de régulation climatique d'un aéronef lorsque le compresseur fonctionne dans une première plage de pression ; et
   la purge d'air d'un deuxième emplacement positionné en amont de la sortie du compresseur centrifuge et en aval de l'entrée du compresseur centrifuge, le deuxième emplacement étant positionné en aval du premier emplacement et fournissant l'air purgé du deuxième emplacement au système de régulation climatique de l'aéronef lorsque le moteur fonctionne dans une deuxième plage de pression, la deuxième plage de pression étant inférieure à la première plage de pression.

2. Procédé selon la revendication 1, dans lequel le compresseur centrifuge comprend des aubes de séparation (35) et le second emplacement est positionné en aval des bords d'attaque des aubes de séparation (35).

**3.** Procédé selon une quelconque revendication précédente, dans lequel le second emplacement est positionné entre 10 % et 75 % d'une position radiale normalisée de carénage ($R_{NS}$).

**4.** Procédé selon une quelconque revendication précédente, dans lequel la purge d'air du second emplacement comprend la récupération partielle de la pression dynamique de l'air.

**5.** Procédé selon une quelconque revendication précédente, dans lequel le second emplacement est positionné sur le carénage du compresseur centrifuge.

**6.** Moteur à turbine à gaz (10) comprenant une section compresseur (14 ; 114) pour fournir de l'air comprimé à une chambre de combustion (16), la section compresseur (14 ; 114) comprenant :

un chemin de gaz annulaire (15), positionné autour de l'axe central du moteur (A), pour transporter de l'air à travers la section compresseur (14 ; 114) ;
une roue centrifuge (30), positionnée dans une extrémité aval de la section compresseur (14 ; 114), la roue centrifuge (30) comprenant une pluralité d'aubes (32) faisant saillie dans le chemin de gaz annulaire (15), dans lequel l'air pénètre dans une entrée de la roue centrifuge (30) dans une direction généralement axiale et sort par une sortie de la roue centrifuge (30) dans une direction généralement radiale ;
un carénage de roue centrifuge (38) entourant les aubes (32) et agissant comme une partie d'une limite radialement extérieure du chemin de gaz annulaire (15) ; dans lequel la section compresseur (14 ; 114) comprend
un premier agencement d'ouverture de purge (21) ; et
un deuxième agencement d'ouverture de purge (31; 131), positionné dans le carénage de roue (38), dans lequel le premier agencement d'ouverture de purge (21) est positionné en amont de l'entrée de la roue centrifuge (30), et le deuxième agencement d'ouverture de purge (31 ; 131) est positionné en amont de la sortie de la roue centrifuge (30) et en aval de l'entrée de la roue centrifuge (30), le deuxième agencement d'ouverture de purge (31 ; 131) étant positionné en aval du premier agencement d'ouverture de purge (21) ; et **caractérisé en ce que**
les premier et deuxième agencements d'ouverture de purge (21 ; 31 ; 131) sont configurés pour fournir de l'air de purge à un système de régulation climatique d'un aéronef, dans lequel le premier agencement d'ouverture de purge (21) est destiné à purger l'air du chemin (15) de gaz annulaire vers le système de régulation climatique lorsque le moteur fonctionne dans une première plage de pression, et le deuxième agencement d'ouverture de purge (31 ; 131) est destiné à purger l'air du chemin de gaz annulaire (15) vers le système de régulation climatique lorsque le moteur (10) fonctionne dans une seconde plage de pression, la seconde plage de pression étant inférieure à la première plage de pression.

**7.** Moteur à turbine à gaz selon la revendication 6, dans lequel le deuxième agencement d'ouverture de purge (31 ; 131) est capable de récupérer partiellement la pression dynamique de l'air.

**8.** Moteur à turbine à gaz selon l'une quelconque des revendications 6 ou 7, dans lequel la roue centrifuge (30) comprend des aubes de séparation (35) et le deuxième agencement d'ouverture de purge (31 ; 131) est positionné en aval des bords d'attaque des aubes de séparation (35), et éventuellement dans lequel le deuxième agencement d'ouverture de purge (31 ; 131) comprend des orifices, à travers un carénage de roue centrifuge (38), alignés partiellement de manière tangentielle à la direction d'écoulement d'air comprimé.

**9.** Moteur à turbine à gaz selon l'une quelconque des revendications 6 à 8, dans lequel le deuxième agencement d'ouverture de purge (31 ; 131) est positionné entre 10 % et 75 % d'une position radiale normalisée de carénage ($R_{NS}$), et éventuellement dans lequel le deuxième agencement d'ouverture de purge (31 ; 131) comprend des orifices, à travers un carénage de roue centrifuge (38), alignés partiellement de manière tangentielle à la direction d'écoulement d'air comprimé.

**10.** Moteur à turbine à gaz selon l'une quelconque des revendications 6 à 9, comprenant en outre un troisième agencement d'ouverture de purge (231), positionné dans le carénage de roue (38), pour fournir de l'air de purge au moteur.

**11.** Moteur à turbine à gaz selon l'une quelconque des revendications 6 à 10, dans lequel les premier et deuxième agencements d'ouverture de purge (21 ; 31 ; 131) du carénage de roue centrifuge (38) comprennent des orifices alignés partiellement de manière tangentielle à la direction prévue d'écoulement d'air comprimé à travers la roue centrifuge (30).

FIG.1

FIG. 2

_30_

_31_

_36_

35

_32_

A

FIG. 3

FIG. 4

EP 3 321 489 B1

FIG.5

**EP 3 321 489 B1**

**REFERENCES CITED IN THE DESCRIPTION**

**Patent documents cited in the description**

- EP 2562370 A
- US 2014255181 A
- EP 2930371 A
- EP 2447504 A